# FASCICULE DE BREVET EUROPEEN

(11) **EP 3 237 077 B1**
(45) Date de publication et mention de la délivrance du brevet: **13.02.2019**
(21) Numéro de dépôt: 15823650.5
(22) Date de dépôt: 14.12.2015
(51) Int. Cl.: A62B 35/00, A63B 29/02, F16B 45/02

(54) **SYSTÈME D'ARRIMAGE DE SÉCURITÉ, MOUSQUETON UTILISABLE POUR UN TEL SYSTÈME ET ENSEMBLE D'ARRIMAGE COMPRENANT UN TEL SYSTÈME.**
SICHERHEITSRÜCKHALTESYSTEM, FÜR SOLCH EIN SYSTEM VERWENDBARER KARABINER UND RÜCKHALTEANORDNUNG MIT SOLCH EINEM SYSTEM
SAFETY RESTRAINT SYSTEM, CARABINER WHICH CAN BE USED FOR SUCH A SYSTEM AND RESTRAINT ASSEMBLY COMPRISING SUCH A SYSTEM

(30) Priorité: 22.12.2014 FR 1402984
(43) Date de publication de la demande: 01.11.2017
(73) Titulaire: Dehondt, Thierry Jean Alain Cornil, 51430 Tinqueux (FR)
(72) Inventeur: Dehondt, Thierry Jean Alain Cornil, 51430 Tinqueux (FR)
(74) Mandataire: Sayettat, Julien Christian
(86) Numéro de dépôt international: PCT/FR2015/053482
(87) Numéro de publication internationale: WO 2016/102807

(56) Documents cités:
- WO-A1-2012/062987
- FR-A1- 2 972 358

## Description

L'invention concerne un système d'arrimage de sécurité pour une personne, un mousqueton utilisable pour un tel système et un ensemble d'arrimage d'une personne comprenant un tel système.

Il est connu - notamment du document EP 2 637 747-A1 - de réaliser un système d'arrimage de sécurité pour une personne comprenant deux mousquetons destinés à recevoir au moins un élément d'arrimage, chacun desdits mousquetons comprenant :
- un crochet de réception dudit élément, ledit crochet présentant en vue de côté une forme générale en J renversé, la hampe du J formant partie inférieure de préhension et la partie recourbée du J formant partie supérieure de réception dudit élément, ladite partie de réception présentant une ouverture de passage dudit élément,
- un portillon - notamment en forme générale de V - comprenant une première branche formant une porte et une deuxième branche d'actionnement de ladite porte, ledit portillon étant monté sur ledit crochet, à l'intersection entre lesdites branches, en rotation selon un axe de rotation disposé entre ladite partie de préhension et ladite partie de réception, de manière à pouvoir présenter d'une part une configuration angulaire de réception dudit élément entre lesdites branches, où ladite ouverture est barrée par ladite deuxième branche, ladite configuration de réception permettant, par poussée exercée - notamment par ledit élément - sur ladite deuxième branche vers le haut, l'actionnement de ladite porte en fermeture, et d'autre part une configuration angulaire de maintien dudit élément dans ladite partie de réception entre lesdites branches, où ladite ouverture est barrée par ladite première branche,
- un premier moyen de verrouillage dudit portillon en configuration de maintien,
ledit système comprenant en outre un dispositif de transmission reliant lesdits mousquetons entre eux, ledit dispositif étant agencé de sorte qu'on ne peut pas passer d'un état où chacun desdits mousquetons est arrimé à un élément à un état où aucun desdits mousquetons n'est arrimé à un élément.

L'élément d'arrimage est par exemple un câble, un barreau d'échelle ou encore une barre d'échafaudage.

Un tel système est notamment intégré dans un ensemble comprenant en outre un harnais d'arrimage d'une personne, les mousquetons étant accrochés audit harnais par des sangles ou des cordes.

Un tel système est notamment utilisable en vue de sécuriser des opérateurs de chantier travaillant en hauteur ou des personnes se livrant à des activités de « via ferrata » ou d'accrobranches.

Le fait de disposer de deux mousquetons reliés par le dispositif de transmission permet à l'utilisateur de passer d'un élément d'arrimage à un autre en étant toujours en condition de sécurité, puisqu'on est toujours dans une situation où au moins un des mousquetons est accroché à un élément d'arrimage.

Dans les activités de chantier, l'élément d'arrimage est souvent une barre d'échafaudage ou une cornière métallique ou un élément métallique analogue, qui présente de ce fait une section de dimension importante - par exemple sous forme de diamètre compris entre 50 et 70 mm.

Afin de bénéficier d'une ergonomie optimale, il est requis qu'un mousqueton ne présente pas de saillie susceptible d'entraver son arrimage lorsqu'il est actionné en translation vers le bas, donc selon une direction verticale ou mettant en jeu une composante verticale.

Cependant, lorsque le mousqueton est destiné à être arrimé à un élément de section importante, il faut disposer d'une large ouverture et donc d'une porte de taille analogue.

De ce fait, lorsque le portillon est en configuration de réception, la porte peut constituer une saillie gênant l'arrimage du mousqueton sur l'élément.

L'invention a pour but de pallier cet inconvénient.

A cet effet, et selon un premier aspect, l'invention propose un système d'arrimage de sécurité pour une personne comprenant deux mousquetons destinés à recevoir au moins un élément d'arrimage, chacun desdits mousquetons comprenant :
- un crochet de réception dudit élément, ledit crochet présentant en vue de côté une forme générale en J renversé, la hampe du J formant partie inférieure de préhension et la partie recourbée du J formant partie supérieure de réception dudit élément, ladite partie de réception présentant une ouverture de passage dudit élément,
- un portillon - notamment en forme générale de V - comprenant une première branche formant une porte et une deuxième branche d'actionnement de ladite porte, ledit portillon étant monté sur ledit crochet, à l'intersection entre lesdites branches, en rotation selon un axe de rotation disposé entre ladite partie de préhension et ladite partie de réception, de manière à pouvoir présenter d'une part une configuration angulaire de réception dudit élément entre lesdites branches, où ladite ouverture est barrée par ladite deuxième branche, ladite configuration de réception permettant, par poussée exercée - notamment par ledit élément - sur ladite deuxième branche vers le haut, l'actionnement de ladite porte en fermeture, et d'autre part une configuration angulaire de maintien dudit élément dans ladite partie de réception entre lesdites branches, où ladite ouverture est barrée par ladite première branche,
- un premier moyen de verrouillage dudit portillon en configuration de maintien,
ledit système comprenant en outre un dispositif de transmission reliant lesdits mousquetons entre eux, ledit dispositif étant agencé de sorte qu'on ne peut pas passer d'un état où chacun desdits mousquetons est arrimé à un élément à un état où aucun desdits mousquetons n'est arrimé à un élément, ladite partie de préhension comprenant une face de réception en regard de laquelle s'étend ladite première branche lorsque ledit portillon est en configuration angulaire de réception, ladite face s'étendant sur tout ou partie de la hauteur de ladite partie de préhension.

On précise que, dans toute la description, sauf précision contraire, les termes de positionnement dans l'espace (supérieur, inférieur, dessous, bas, haut, vertical, horizontal,...) sont pris en référence à un mousqueton en situation usuelle d'utilisation, sa partie inférieure de préhension s'étendant verticalement.

Lorsqu'il est dit que le dispositif de transmission est agencé de sorte qu'on ne peut pas passer d'un état où chacun desdits mousquetons est arrimé à un élément à un état où aucun desdits mousquetons n'est arrimé à un élément, on fait référence à des conditions normalisées d'utilisation du système, c'est à dire sans avoir recours à un outil ou à une manoeuvre complexe en vue d'obtenir un déverrouillage d'urgence.

En effet, certains systèmes permettent le déverrouillage d'un mousqueton alors que l'autre mousqueton n'est pas arrimé, ledit déverrouillage se faisant au moyen d'un outil ou encore par actionnement d'un organe d'accès malaisé pour la main de l'utilisateur.

Avec l'agencement proposé, on dispose d'un système dans lequel les mousquetons sont dépourvus de partie saillante susceptible d'entraver leur manoeuvre d'arrimage par une translation vers le bas, donc selon une direction verticale ou mettant en jeu une composante verticale, par exemple inclinée de l'ordre de 45° par rapport à la verticale.

En effet, l'invention met à profit le fait que la partie de préhension présente une étendue importante - notamment correspondant à la largeur d'une main - pour amener la porte - qui présente elle aussi une étendue importante - en regard de ladite partie, de sorte que ladite porte ne forme pas une saillie gênante pour l'arrimage du mousqueton quand le portillon est en configuration de réception. Selon un deuxième aspect, l'invention concerne un mousqueton utilisable pour un tel système.

Selon un troisième aspect, l'invention propose un ensemble d'arrimage d'une personne comprenant un tel système.

D'autres particularités et avantages de l'invention apparaîtront dans la description qui suit, faite en référence aux figures jointes, dans lesquelles :
- la figure 1 est une vue schématique en perspective d'un ensemble d'arrimage d'une personne comprenant un système selon l'invention,

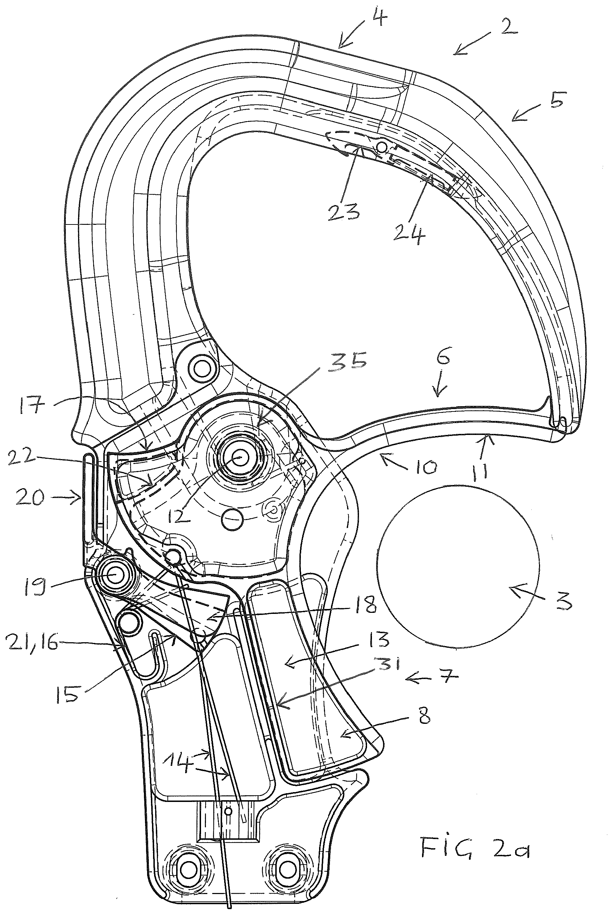

- les figures 2a à 2h sont des vues en transparence de côté d'un mousqueton selon une réalisation, et d'un élément d'arrimage, la porte dudit mousqueton étant ouverte (2a), en cours de fermeture avec le verrou en position de verrouillage (2b) et en position de libération (2c), fermée avec les deux loquets en position de verrouillage (2d), fermée avec le premier loquet en position de verrouillage et le deuxième loquet en position de déverrouillage (2e, 2f où le portillon ayant tourné vers sa configuration de réception se trouve bloqué en rotation du fait du verrouillage par le premier loquet), fermée avec les deux loquets en position de déverrouillage (2g), fermée avec le premier loquet en position de déverrouillage et le deuxième loquet en position de verrouillage (2h),
- les figures 3a et 3b sont des vues schématiques de côté d'un mousqueton selon une autre réalisation, la porte étant fermée (3a) et ouverte (3b).

En référence aux figures, on décrit un système 1 d'arrimage de sécurité pour une personne comprenant deux mousquetons 2 destinés à recevoir au moins un élément d'arrimage 3, chacun desdits mousquetons comprenant :
- un crochet 4 de réception dudit élément, ledit crochet présentant en vue de côté une forme générale en J renversé, la hampe du J formant partie inférieure de préhension 7 et la partie recourbée du J formant partie supérieure de réception 5 dudit élément, ladite partie de réception présentant une ouverture 6 de passage dudit élément,
- un portillon 10 - notamment en forme générale de V - comprenant une première branche formant une porte 8 et une deuxième branche 11 d'actionnement de ladite porte, ledit portillon étant monté sur ledit crochet, à l'intersection entre lesdites branches, en rotation selon un axe de rotation 12 disposé entre ladite partie de préhension et ladite partie de réception, de manière à pouvoir présenter d'une part une configuration angulaire de réception dudit élément entre lesdites branches, où ladite ouverture est barrée par ladite deuxième branche, ladite configuration de réception permettant, par poussée exercée - notamment par ledit élément - sur ladite deuxième branche vers le haut, l'actionnement de ladite porte en fermeture, et d'autre part une configuration angulaire de maintien dudit élément dans ladite partie de réception entre lesdites branches, où ladite ouverture est barrée par ladite première branche,
- un premier moyen de verrouillage dudit portillon en configuration de maintien,
ledit système comprenant en outre un dispositif de transmission 9 reliant lesdits mousquetons entre eux, ledit dispositif étant agencé de sorte qu'on ne peut pas passer d'un état où chacun desdits mousquetons est arrimé à un élément 3 à un état où aucun desdits mousquetons n'est arrimé à un élément 3, ladite partie de préhension comprenant une face de réception 31 en regard de laquelle s'étend ladite première branche lorsque ledit portillon est en configuration angulaire de réception, ladite face s'étendant sur tout ou partie de la hauteur de ladite partie de préhension.

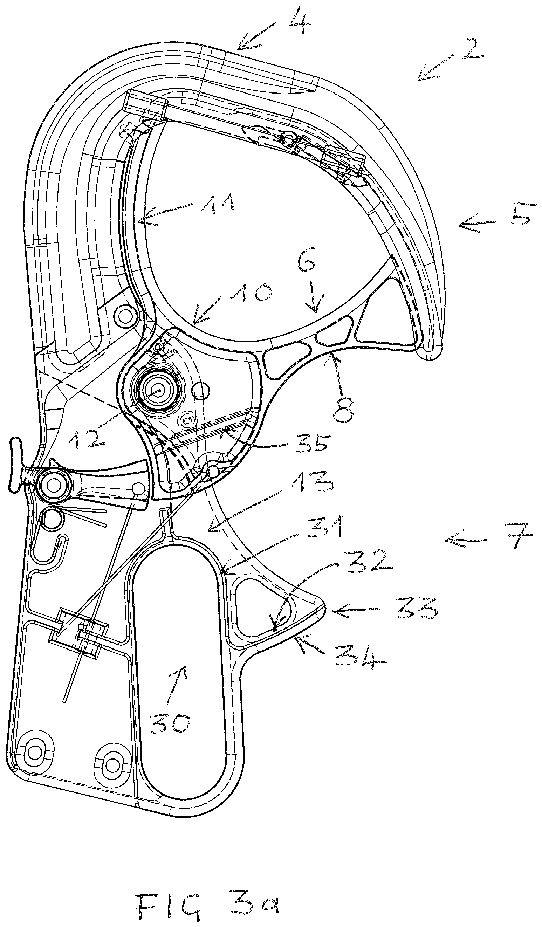

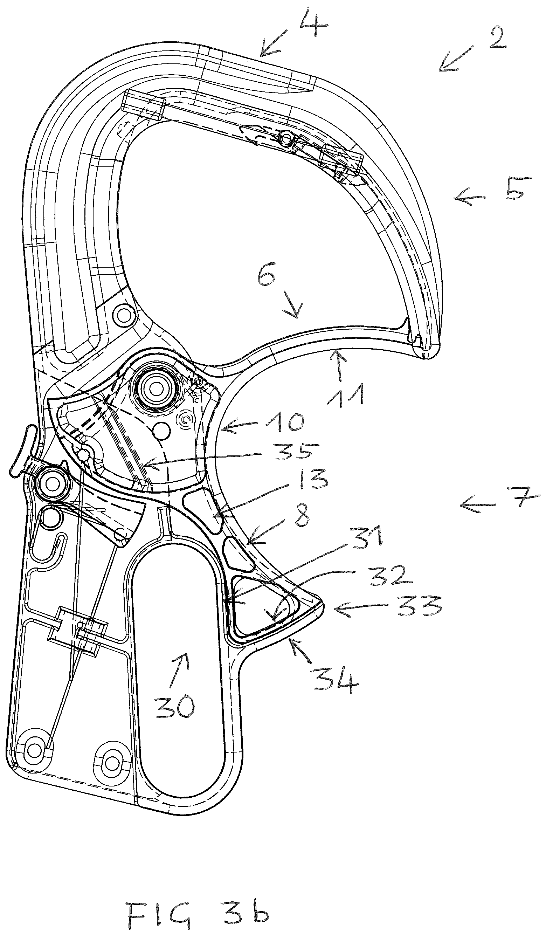

Selon la réalisation représentée en figures 3, la partie de préhension 7 est pourvue d'un orifice 30 d'introduction de la main de l'utilisateur.

Avec un tel agencement, la main de l'utilisateur ne vient pas en interférence avec la première branche, quand elle s'étend en regard de la face de réception 31, lorsque le portillon 10 est actionné en rotation vers sa configuration de maintien. En outre, la présence d'un tel orifice 30 permet à l'utilisateur d'avoir une préhension optimisée du mousqueton 2 lui permettant de se suspendre à un élément 3.

Enfin, un tel orifice 30 apporte une protection aux doigts de l'utilisateur.

De façon non représentée, il peut être prévu un capot de protection s'étendant latéralement par rapport à l'orifice 30 pour entourer au moins une partie des doigts de l'utilisateur non protégée par les parois dudit orifice.

Le capot de protection peut être sous forme d'une pièce associée au crochet 4, par exemple par des vis, ladite pièce pouvant être notamment en matériau plastique moulé de manière à présenter un faible poids, ou encore être issu de matière dudit crochet.

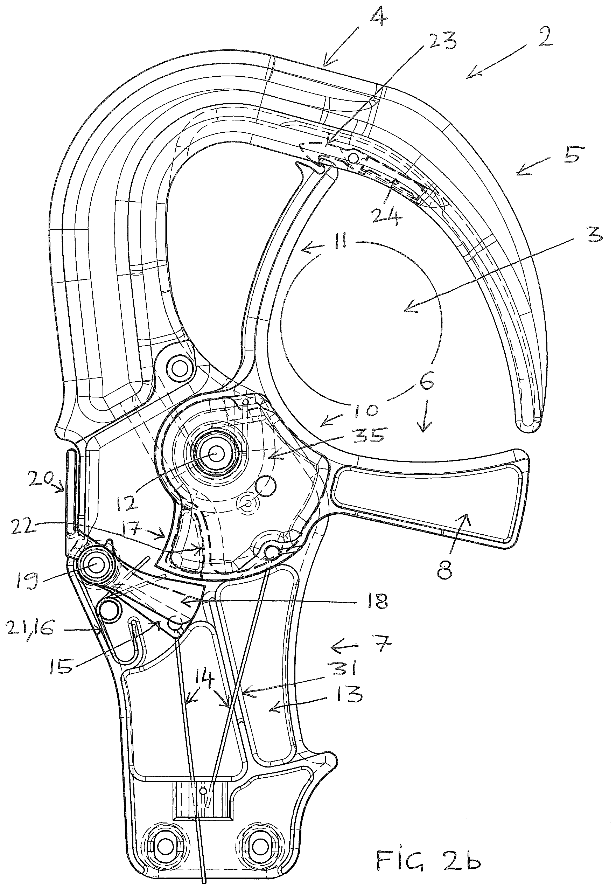

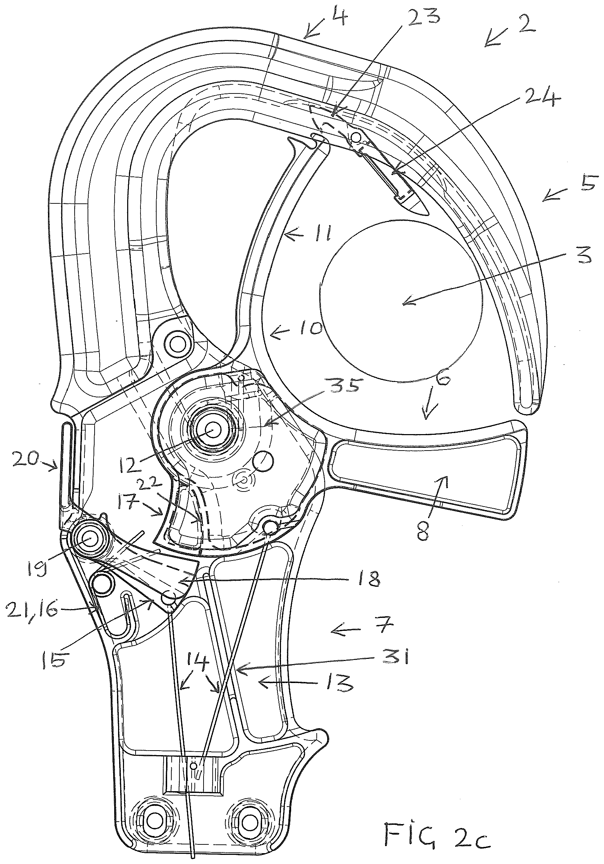

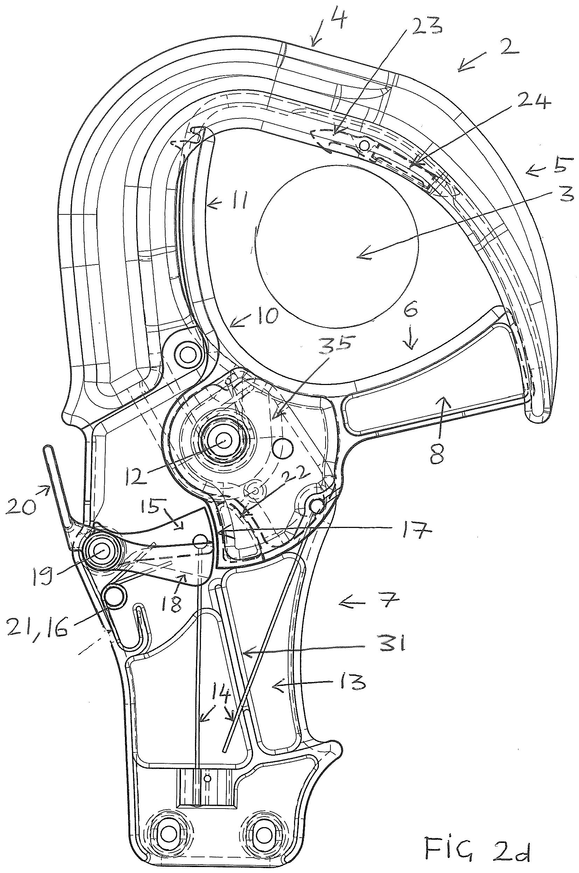

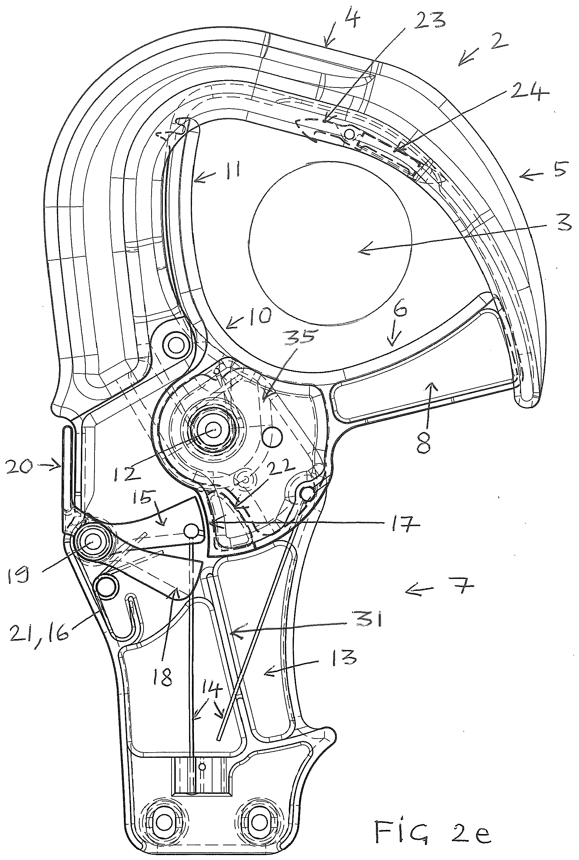

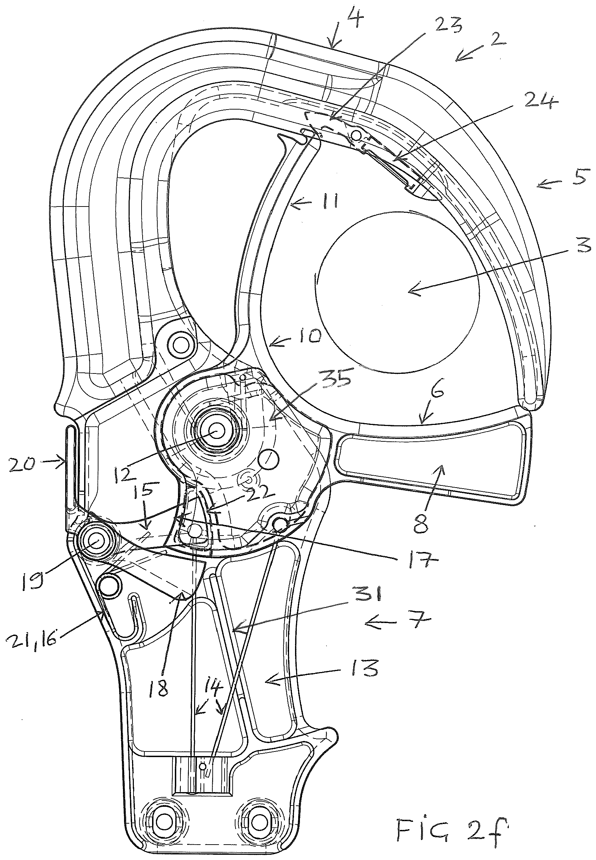

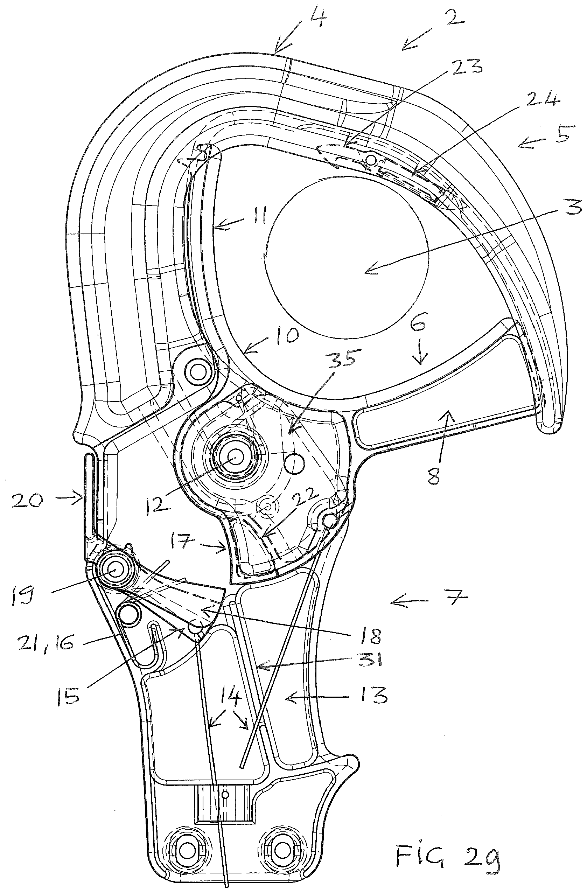

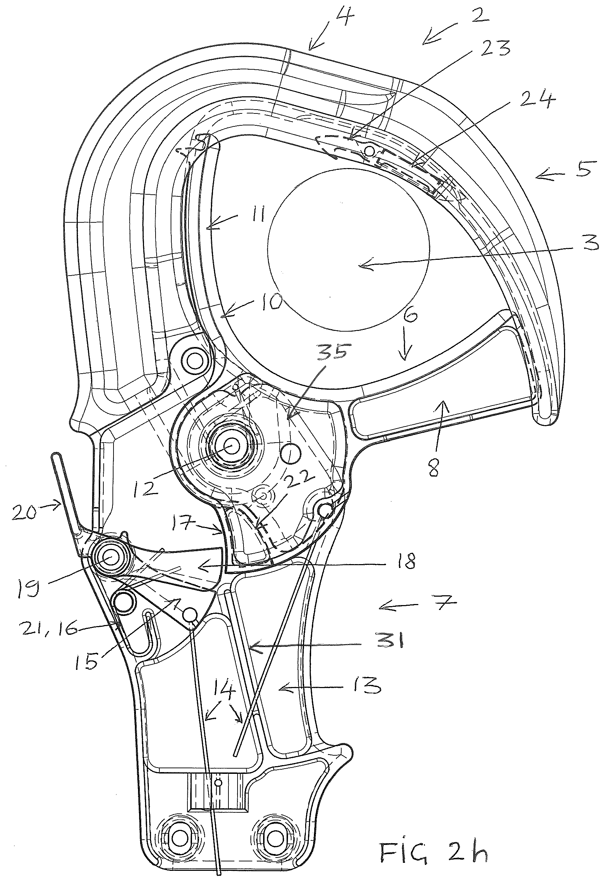

Selon les réalisations représentées en figures 2 et 3, la première branche 8, quand elle s'étend en regard de la face de réception 31, s'insère au moins partiellement dans un logement 13 de forme complémentaire prévu dans la partie de préhension 7.

Selon les réalisations représentées, le logement 13 est sous forme de cavité.

En variante non représentée, le logement 13 est sous forme d'évidement débouchant latéralement de part et d'autre de la paroi 31.

Dans la réalisation des figures 3, le logement 13 est sous forme de cavité délimitée entre autres par la face 31 et par une paroi 32 intégrée à une saillie 33 disposée en bas de ladite face.

Selon la réalisation représentée en figures 3, la première branche 8 s'insère complétement dans la cavité de sorte que ladite première branche ne forme pas une saillie gênant l'arrimage du mousqueton 2.

Selon la réalisation représentée en figures 3, la saillie 33 présente un pan incliné 34 destiné à permettre le guidage de l'élément 3 entre les branches 8,11 du portillon 10 en configuration de réception lorsque le mousqueton 2 est positionné au-dessus dudit élément.

Ainsi, la saillie 33 ne constitue aucune gêne dans les manoeuvres d'introduction d'un élément 3 dans un mousqueton 2.

On observe que la réalisation représentée en figures 3 permet de réaliser une introduction d'un élément 3 selon une direction inclinée de sensiblement 45° par rapport à la verticale alors que la réalisation des figures 2 permet de réaliser une introduction d'un élément 3 selon une direction sensiblement verticale.

Selon les réalisations représentées, le dispositif de transmission 9 comprend deux câbles 14 coulissant chacun dans une gaine non représentée, usuellement dénommés « câbles Bowden », chacun desdits câbles étant relié de part et d'autre :
- à un portillon 10, à distance de son axe de rotation 12,
- et au premier moyen de verrouillage de l'autre portillon 10,
de sorte que la mise d'un portillon 10 en configuration angulaire de maintien (figures 2d à 2h), - respectivement de réception (figure 2a) - entraîne la désactivation (figures 2g, 2h) - respectivement l'activation (figures 2d à 2f) - du premier moyen de verrouillage de l'autre portillon 10.

Selon les réalisations représentées, le premier moyen de verrouillage comprend :
- un premier loquet 15 monté en rotation sur le crochet 4 entre une position de verrouillage (figures 2d à 2f) et une position de déverrouillage (figures 2g, 2h),
- un premier ressort 16 activant ledit loquet vers sa position de verrouillage,
- une première dent 22, disposée sur ledit portillon, de réception dudit loquet en position de verrouillage.

Selon les réalisations représentées, la mise d'un portillon 10 en configuration de réception réalise une traction sur le câble 14 correspondant, ladite traction ayant pour effet de dégager sur l'autre portillon 10 le premier loquet 15 de la première dent 22.

Selon les réalisations représentées, le système 1 comprend en outre un deuxième moyen de verrouillage, ledit deuxième moyen de verrouillage comprenant :
- un deuxième loquet 18 monté en rotation - ici selon l'axe de rotation 19 du premier loquet 15 - sur le crochet 4 entre une position de verrouillage (figures 2d et 2h) et une position de déverrouillage (figures 2e à 2g), ledit loquet présentant une zone d'actionnement 20 par l'utilisateur - ici par appui - permettant de l'amener en position de déverrouillage,
- un deuxième ressort 21 - ici issu du premier ressort 16 qui est à base de fil métallique comprenant deux pattes séparées par une spirale, chacune desdites pattes prenant appui respectivement sur chacun des loquets 15,18 - activant ledit deuxième loquet vers sa position de verrouillage,
- une deuxième dent 17 - ici décalée axialement et angulairement par rapport à la première dent 22 - recevant ledit deuxième loquet en position de verrouillage.

La présence du deuxième moyen de verrouillage oblige l'utilisateur à effectuer une manoeuvre volontaire pour décrocher un mousqueton 2 d'un élément d'arrimage 3.

Selon les réalisations représentées, un mousqueton 2 comprend en outre un ressort 35 actionnant le portillon 10 vers sa configuration de réception.

On dispose ainsi d'une assistance à l'ouverture de la porte 8, qui facilite le retrait d'un élément 3 du mousqueton 2.

Selon un mode de réalisation, le système 1 comprend un dispositif garantissant l'accrochage d'un mousqueton 2 sur un élément 3 sécurisé, ledit dispositif comprenant :
- un verrou 23 monté mobile - ici en rotation - sur la partie de réception 5, entre une position de verrouillage (figure 2b) du portillon 10 pour empêcher son actionnement vers sa configuration de maintien et une position de libération (figure 2c) de l'actionnement dudit portillon vers ladite position,
- un troisième ressort, non représenté, actionnant ledit verrou vers sa position de verrouillage,
- un aimant 24 monté sur ledit verrou, ledit aimant étant disposé de manière à permettre un actionnement dudit verrou vers sa position de libération lorsqu'un matériau apte à être attiré par un aimant - ledit matériau étant notamment constitutif d'un élément d'arrimage 3 - est disposé en-dessous dudit verrou.

On dispose ainsi d'une sécurité empêchant l'arrimage d'un mousqueton 2 sur un élément 3 non réalisé dans un matériau - métallique en l'occurrence - apte à être attiré par un aimant.

Selon une variante de réalisation, le système 1 comprend un dispositif garantissant l'accrochage d'un mousqueton 2 sur un élément 3 sécurisé, ledit dispositif comprenant :
- un verrou 23 monté mobile - ici en rotation - sur la partie de réception 5, entre une position de verrouillage (figure 2b) du portillon 10 pour empêcher son actionnement vers sa configuration de maintien et une position de libération (figure 2c) de l'actionnement dudit portillon vers ladite position,
- un troisième ressort, non représenté, actionnant ledit verrou vers sa position de verrouillage,
- un composant 24 en matériau apte à être attiré par un aimant, ledit composant étant monté sur ledit verrou, ledit composant étant disposé de manière à permettre un actionnement dudit verrou vers sa position de libération lorsqu'un aimant est disposé en-dessous dudit verrou,
- un aimant, non représenté, destiné à être monté sur un élément 3 de manière à permettre un actionnement dudit verrou vers sa position de libération lorsque ledit aimant est disposé en-dessous dudit verrou.

On dispose ainsi d'une sécurité empêchant l'arrimage d'un mousqueton 2 sur un élément 3 non identifié comme permettant un tel arrimage, un élément 3 sécurisé étant pourvu d'un aimant en regard duquel un mousqueton 2 doit être disposé pour permettre son arrimage.

On décrit à présent un mousqueton 2 utilisable pour un tel système, ledit mousqueton comprenant :
- un crochet 4 de réception d'un élément 3, ledit crochet présentant en vue de côté une forme générale en J renversé, la hampe du J formant partie inférieure de préhension 7 et la partie recourbée du J formant partie supérieure de réception 5 dudit élément, ladite partie de réception présentant une ouverture 6 de passage dudit élément,
- un portillon 10 - notamment en forme générale de V - comprenant une première branche formant une porte 8 et une deuxième branche 11 d'actionnement de ladite porte, ledit portillon étant monté sur ledit crochet, à l'intersection entre lesdites branches, en rotation selon un axe de rotation 12 disposé entre ladite partie de préhension et ladite partie de réception, de manière à pouvoir présenter d'une part une configuration angulaire de réception dudit élément entre lesdites branches, où ladite ouverture est barrée par ladite deuxième branche, ladite configuration de réception permettant, par poussée exercée - notamment par ledit élément - sur ladite deuxième branche vers le haut, l'actionnement de ladite porte en fermeture, et d'autre part une configuration angulaire de maintien dudit élément dans ladite partie de réception entre lesdites branches, où ladite ouverture est barrée par ladite première branche,
- un premier moyen de verrouillage dudit portillon en configuration de maintien,
ladite partie de préhension comprenant une face de réception 31 en regard de laquelle s'étend ladite première branche lorsque ledit portillon est en configuration angulaire de réception, ladite face s'étendant sur tout ou partie de la hauteur de ladite partie de préhension.

Selon les réalisations représentées en figures 2 et 3, la première branche 8, quand elle s'étend en regard de la face de réception 31, s'insère partiellement (figures 2) - ou totalement (figures 3) - dans un logement 13 prévu dans la partie de préhension 7, de manière à ne pas provoquer une gêne pour l'utilisateur.

Selon la réalisation représentée en figures 3, la partie de préhension 7 est pourvue d'un orifice 30 d'introduction de la main de l'utilisateur.

Avec un tel agencement, la main de l'utilisateur ne vient pas en interférence avec la première branche, quand elle s'étend en regard de la face de réception 31, lorsque le portillon 10 est actionné en rotation vers sa configuration de maintien.

En outre, la présence d'un tel orifice 30 permet à l'utilisateur d'avoir une préhension optimisée du mousqueton 2 lui permettant de se suspendre à un élément 3.

Enfin, un tel orifice 30 apporte une protection aux doigts de l'utilisateur.

De façon non représentée, il peut être prévu un capot de protection s'étendant latéralement par rapport à l'orifice 30 pour entourer au moins une partie des doigts de l'utilisateur non protégée par les parois dudit orifice.

Le capot de protection peut être sous forme d'une pièce associée au crochet 4, par exemple par des vis, ladite pièce pouvant être notamment en matériau plastique moulé de manière à présenter un faible poids, ou encore être issu de matière dudit crochet.

Selon les réalisations représentées, le logement 13 est sous forme de cavité.

En variante non représentée, le logement 13 est sous forme d'évidement débouchant latéralement de part et d'autre de la paroi 31.

Dans la réalisation des figures 3, le logement 13 est sous forme de cavité délimitée entre autres par la face 31 et par une paroi 32 intégrée à une saillie 33 disposée en bas de ladite face.

Selon la réalisation représentée en figures 3, la première branche 8 s'insère complétement dans la cavité de sorte que ladite première branche ne forme pas une saillie gênant l'arrimage du mousqueton 2.

La saillie 33 présente un pan incliné 34 destiné à permettre le guidage de l'élément 3 entre les branches 8,11 du portillon 10 en configuration de réception lorsque le mousqueton 2 est positionné au-dessus dudit élément.

Selon les réalisations représentées, un mousqueton 2 comprend en outre un ressort 35 actionnant le portillon 10 vers sa configuration de réception.

On dispose ainsi d'une assistance à l'ouverture de la porte 8, qui facilite le retrait d'un élément 3 du mousqueton 2.

Bien entendu, un tel mousqueton 2 peut être utilisé en tant que tel, sans être intégré à un système 1 tel que décrit précédemment, l'agencement prévu permettant d'avoir un mousqueton dépourvu de partie saillante susceptible d'entraver sa manoeuvre d'arrimage lorsqu'il est actionné en translation vers le bas.

On précise que l'orifice 30 décrit ci-dessus peut concerner aussi des mousquetons d'autres types que celui décrit ci-dessus.

A cet effet, l'invention concerne également un mousqueton comprenant :
- un crochet de réception d'un élément d'arrimage, ledit crochet présentant une partie de préhension et une partie de réception dudit élément, ladite partie de réception présentant une ouverture de passage dudit élément,
- une porte de fermeture de ladite ouverture,
ladite partie de préhension étant pourvue d'un orifice d'introduction de la main de l'utilisateur.

On décrit enfin un ensemble 25 d'arrimage d'une personne comprenant un tel système 1, ledit ensemble comprenant en outre un harnais 26 d'arrimage d'un utilisateur et deux sangles 27 de liaison des mousquetons audit harnais.

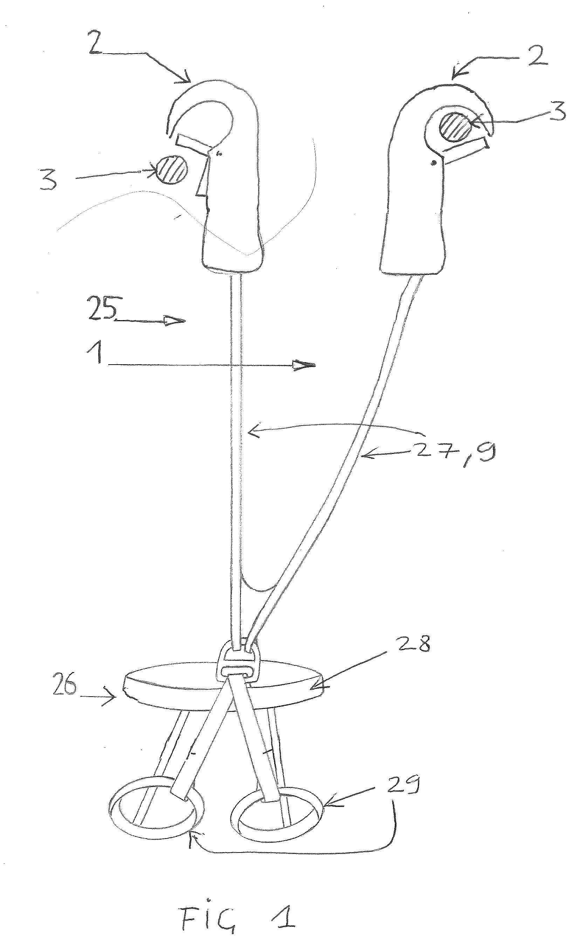

Selon la réalisation représentée en figure 1, le harnais comprend une ceinture 28 et deux boucles 29 de logement des cuisses de l'utilisateur et, de façon non représentée, une boucle de réglage.

## Revendications

1. Système (1) d'arrimage de sécurité pour une personne comprenant deux mousquetons (2) destinés à recevoir au moins un élément d'arrimage (3), chacun desdits mousquetons comprenant :
• un crochet (4) de réception dudit élément, ledit crochet présentant en vue de côté une forme générale en J renversé, la hampe du J formant partie inférieure de préhension (7) et la partie recourbée du J formant partie supérieure de réception (5) dudit élément, ladite partie de réception présentant une ouverture (6) de passage dudit élément,
• un portillon (10) - notamment en forme générale de V - comprenant une première branche formant une porte (8) et une deuxième branche (11) d'actionnement de ladite porte, ledit portillon étant monté sur ledit crochet, à l'intersection entre lesdites branches, en rotation selon un axe de rotation (12) disposé entre ladite partie de préhension et ladite partie de réception, de manière à pouvoir présenter d'une part une configuration angulaire de réception dudit élément entre lesdites branches, où ladite ouverture est barrée par ladite deuxième branche, ladite configuration de réception permettant, par poussée exercée - notamment par ledit élément - sur ladite deuxième branche vers le haut, l'actionnement de ladite porte en fermeture, et d'autre part une configuration angulaire de maintien dudit élément dans ladite partie de réception entre lesdites branches, où ladite ouverture est barrée par ladite première branche,
• un premier moyen de verrouillage dudit portillon en configuration de maintien,
ledit système comprenant en outre un dispositif de transmission (9) reliant lesdits mousquetons entre eux, ledit dispositif étant agencé de sorte qu'on ne peut pas passer d'un état où chacun desdits mousquetons est arrimé à un élément (3) à un état où aucun desdits mousquetons n'est arrimé à un élément (3), ledit système étant **caractérisé en ce que** ladite partie de préhension comprend une face de réception (31) en regard de laquelle s'étend ladite première branche lorsque ledit portillon est en configuration angulaire de réception, ladite face s'étendant sur tout ou partie de la hauteur de ladite partie de préhension.

2. Système selon la revendication 1, **caractérisé en ce que** la partie de préhension (7) est pourvue d'un orifice (30) d'introduction de la main de l'utilisateur.

3. Système selon l'une des revendications 1 ou 2, **caractérisé en ce que** la première branche (8), quand elle s'étend en regard de la face de réception (31), s'insère au moins partiellement dans un logement (13) de forme complémentaire prévu dans la partie de préhension (7).

4. Système selon la revendication 3, **caractérisé en ce que** le logement (13) est sous forme de cavité délimitée entre autres par la face (31) et par une paroi (32) intégrée à une saillie (33) disposée en bas de ladite face.

5. Système selon la revendication 4, **caractérisé en ce que** la saillie (33) présente un pan incliné (34) destiné à permettre le guidage de l'élément (3) entre les branches (8,11) du portillon (10) en configuration de réception lorsque le mousqueton (2) est positionné au-dessus dudit élément.

6. Système selon l'une quelconque des revendications 1 à 5, **caractérisé en ce que** le dispositif de transmission (9) comprend deux câbles (14) coulissant chacun dans une gaine, chacun desdits câbles étant relié de part et d'autre :
• à un portillon (10), à distance de son axe de rotation (12),
• et au premier moyen de verrouillage de l'autre portillon (10),
de sorte que la mise d'un portillon (10) en configuration angulaire de maintien - respectivement de réception - entraîne la désactivation - respectivement l'activation - du premier moyen de verrouillage de l'autre portillon (10).

7. Système selon l'une quelconque des revendications 1 à 6, **caractérisé en ce que** le premier moyen de verrouillage comprend :
• un premier loquet (15) monté en rotation sur le crochet (4) entre une position de verrouillage et une position de déverrouillage,
• un premier ressort (16) activant ledit loquet vers sa position de verrouillage,
• une première dent (22), disposée sur ledit portillon, de réception dudit loquet en position de verrouillage.

8. Système selon l'une quelconque des revendications 1 à 7, **caractérisé en ce qu'**il comprend en outre un deuxième moyen de verrouillage, ledit deuxième moyen de verrouillage comprenant :
• un deuxième loquet (18) monté en rotation - notamment selon l'axe de rotation (19) du premier loquet (15) - sur le crochet (4) entre une position de verrouillage et une position de déverrouillage, ledit loquet présentant une zone d'actionnement (20) par l'utilisateur - notamment par appui - permettant de l'amener en position de déverrouillage,
• un deuxième ressort (21) - notamment issu du premier ressort (16) - activant ledit deuxième loquet vers sa position de verrouillage,
• une deuxième dent (17) - notamment décalée axialement et angulairement par rapport à la première dent (22) - recevant ledit deuxième loquet en position de verrouillage.

9. Système selon l'une quelconque des revendications 1 à 8, **caractérisé en ce qu'**un mousqueton (2) comprend en outre un ressort (35) actionnant le portillon (10) vers sa configuration de réception.

10. Système selon l'une quelconque des revendications 1 à 9, **caractérisé en ce qu'**il comprend un dispositif garantissant l'accrochage d'un mousqueton (2) sur un élément (3) sécurisé, ledit dispositif comprenant :
• un verrou (23) monté mobile - ici en rotation - sur la partie de réception (5), entre une position de verrouillage du portillon (10) pour empêcher son actionnement vers sa configuration de maintien et une position de libération de l'actionnement dudit portillon vers ladite position,
• un troisième ressort actionnant ledit verrou vers sa position de verrouillage,
• un aimant (24) monté sur ledit verrou, ledit aimant étant disposé de manière à permettre un actionnement dudit verrou vers sa position de libération lorsqu'un matériau apte à être attiré par un aimant - ledit matériau étant notamment constitutif d'un élément (3) - est disposé en-dessous dudit verrou.

11. Système selon l'une quelconque des revendications 1 à 9, **caractérisé en ce qu'**il comprend un dispositif garantissant l'accrochage d'un mousqueton (2) sur un élément (3) sécurisé, ledit dispositif comprenant :
• un verrou (23) monté mobile - ici en rotation - sur la partie de réception (5), entre une position de verrouillage du portillon (10) pour empêcher son actionnement vers sa configuration de maintien et une position de libération de l'actionnement dudit portillon vers ladite position,
• un troisième ressort actionnant ledit verrou vers sa position de verrouillage,
• un composant (24) en matériau apte à être attiré par un aimant, ledit composant étant monté sur ledit verrou, ledit composant étant disposé de manière à permettre un actionnement dudit verrou vers sa position de libération lorsqu'un aimant est disposé en-dessous dudit verrou,
• un aimant destiné à être monté sur un élément (3) de manière à permettre un actionnement dudit verrou vers sa position de libération lorsque ledit aimant est disposé en-dessous dudit verrou.

12. Mousqueton (2) utilisable pour un système selon l'une quelconque des revendications 1 à 11, ledit mousqueton comprenant :
• un crochet (4) de réception d'un élément (3), ledit crochet présentant en vue de côté une forme générale en J renversé, la hampe du J formant partie inférieure de préhension (7) et la partie recourbée du J formant partie supérieure de réception (5) dudit élément, ladite partie de réception présentant une ouverture (6) de passage dudit élément,
• un portillon (10) - notamment en forme générale de V - comprenant une première branche formant une porte (8) et une deuxième branche (11) d'actionnement de ladite porte, ledit portillon étant monté sur ledit crochet, à l'intersection entre lesdites branches, en rotation selon un axe de rotation (12) disposé entre ladite partie de préhension et ladite partie de réception, de manière à pouvoir présenter d'une part une configuration angulaire de réception dudit élément entre lesdites branches, où ladite ouverture est barrée par ladite deuxième branche, ladite configuration de réception permettant, par poussée exercée - notamment par ledit élément - sur ladite deuxième branche vers le haut, l'actionnement de ladite porte en fermeture, et d'autre part une configuration angulaire de maintien dudit élément dans ladite partie de réception entre lesdites branches, où ladite ouverture est barrée par ladite première branche,
• un premier moyen de verrouillage dudit portillon en configuration de maintien,
ledit mousqueton étant **caractérisé en ce que** ladite partie de préhension comprend une face de réception (31) en regard de laquelle s'étend ladite première branche lorsque ledit portillon est en configuration angulaire de réception, ladite face s'étendant sur tout ou partie de la hauteur de ladite partie de préhension.

13. Mousqueton selon la revendication 12, **caractérisé en ce que** la première branche (8), quand elle s'étend en regard de la face de réception (31), s'insère au moins partiellement dans un logement (13) de forme complémentaire prévu dans la partie de préhension (7).

14. Mousqueton selon l'une des revendications 12 ou 13, **caractérisé en ce que** la partie de préhension (7) est pourvue d'un orifice (30) d'introduction de la main de l'utilisateur.

15. Mousqueton selon l'une quelconque des revendications 12 à 14, **caractérisé en ce qu'**il comprend en outre un ressort (35) actionnant le portillon (10) vers sa configuration de réception.

16. Ensemble (25) d'arrimage d'une personne comprenant un système (1) selon l'une quelconque des revendications 1 à 11, ledit ensemble comprenant en outre un harnais (26) d'arrimage d'un utilisateur et deux sangles (27) de liaison des mousquetons (2) audit harnais.

## Patentansprüche

1. System (1) zur Sicherheitsanbindung für eine Person, umfassend zwei zum Aufnehmen mindestens eines Anbindungselements (3) bestimmte Karabinerhaken (2), wobei jeder der Karabinerhaken Folgendes umfasst:
- einen Aufnahmehaken (4) des Elements, wobei der Haken in Seitenansicht eine allgemeine Form eines umgedrehten J aufweist, wobei der Schaft des J einen unteren Griffteil (7) bildet und der gekrümmte Teil des J einen oberen Aufnahmeteil (5) des Elements bildet, wobei der Aufnahmeteil eine Durchgangsöffnung (6) des Elements aufweist,
- eine Sperre (10) - insbesondere in allgemeiner V-Form - umfassend einen ersten Schenkel, der eine Klappe (8) bildet, und einen zweiten Betätigungsschenkel (11) der Klappe, wobei die Sperre am Schnittpunkt zwischen den Schenkeln auf dem Haken um eine zwischen dem Griffteil und dem Aufnahmeteil angeordneten Drehachse (12) drehbar montiert ist, sodass sie einerseits eine Aufnahmewinkelkonfiguration des Elements zwischen den Schenkeln, bei der die Öffnung durch den zweiten Schenkel blockiert ist, wobei die Aufnahmekonfiguration, durch nach oben ausgeübtes Drücken - insbesondere durch das Element - auf den zweite Schenkel, die Verschlussbetätigung der Klappe ermöglicht, und andererseits eine Haltewinkelkonfiguration des Elements in dem Aufnahmeteil zwischen den Schenkeln, bei der die Öffnung durch den ersten Schenkel blockiert ist, aufweisen kann,
- ein erstes Verriegelungsmittel der Sperre in Haltekonfiguration,
wobei das System des Weiteren eine Übertragungsvorrichtung (9) umfasst, die die Karabinerhaken untereinander verbindet, wobei die Vorrichtung angeordnet ist, sodass man nicht aus einem Zustand, in dem jeder der Karabinerhaken an einem Element (3) angebunden ist, in einen Zustand gelangen kann, in dem keiner der Karabinerhaken an einem Element (3) angebunden ist, wobei das System **dadurch gekennzeichnet ist, dass** der erste Griffteil eine Aufnahmefläche (31) umfasst, der zugewandt sich der erste Schenkel erstreckt, wenn die Sperre sich in Aufnahmewinkelkonfiguration befindet, wobei die Fläche sich durch die gesamte oder einen Teil der Höhe des Griffteils erstreckt.

2. System nach Anspruch 1, **dadurch gekennzeichnet, dass** der Griffteil (7) mit einem Loch (30) zum Einführen der Hand des Benutzers bereitgestellt ist.

3. System nach einem der Ansprüche 1 oder 2, **dadurch gekennzeichnet, dass** der erste Schenkel (8), wenn er sich der Aufnahmefläche (31) zugewandt erstreckt, sich mindestens teilweise in einen in dem Griffteil (7) vorgesehenen Aufnahmeraum (13) von komplementärer Form einfügt.

4. System nach Anspruch 3, **dadurch gekennzeichnet, dass** der Aufnahmeraum (13) in Form von unter anderem der Fläche (31) und durch eine in einen unten an der Fläche angeordneten Vorsprung (33) integrierte Wandung (32) begrenztem Hohlraum vorliegt.

5. System nach Anspruch 4, **dadurch gekennzeichnet, dass** der Vorsprung (33) eine abgeschrägte Teilfläche (34) aufweist, um die Führung des Elements (3) zwischen den Schenkeln (8, 11) der Sperre (10) in der Aufnahmekonfiguration zu ermöglichen, wenn der Karabinerhaken (2) über dem Element positioniert ist.

6. System nach einem der Ansprüche 1 bis 5, **dadurch gekennzeichnet, dass** die Übertragungsvorrichtung (9) zwei jeweils in einer Hülle gleitende Kabel (14) umfasst, wobei jedes der Kabel auf beiden Seiten verbunden ist:
- mit einer Sperre (10), von ihrer Drehachse (12) beabstandet,
- und mit dem ersten Verriegelungsmittel der anderen Sperre (10),
sodass der Einsatz von einer Sperre (10) in Haltewinkelkonfiguration - beziehungsweise der Aufnahmekonfiguration - die Deaktivierung - beziehungsweise die Aktivierung - des ersten Verriegelungsmittels der anderen Sperre (10) verursacht.

7. System nach einem der Ansprüche 1 bis 6, **dadurch gekennzeichnet, dass** das erste Verriegelungsmittel Folgendes umfasst:
- eine erste drehbar auf dem Haken (4) zwischen einer Verriegelungsposition und einer Entriegelungsposition montierte Arretierung (15),
- eine erste die Arretierung in Richtung ihrer Verriegelungsposition aktivierende Feder (16),
- einen ersten auf der Sperre angeordneten Zinken (22) zur Aufnahme der Arretierung in Verriegelungsposition.

8. System nach einem der Ansprüche 1 bis 7, **dadurch gekennzeichnet, dass** es des Weiteren ein zweites Verriegelungsmittel umfasst, wobei das zweite Verriegelungsmittel Folgendes umfasst:
- eine zweite drehbar - insbesondere um die Drehachse (19) der ersten Arretierung (15) - montierte Arretierung (18) auf dem Haken (4) zwischen einer Verriegelungsposition und einer Entriegelungsposition, wobei die Arretierung eine Zone des Betätigens (20) - insbesondere durch Drücken - durch den Benutzer aufweist, die es ermöglicht, sie in Entriegelungsposition zu bringen,
- eine zweite - insbesondere aus der ersten Feder (16) hervorgehende - die zweite Arretierung in Richtung ihrer Verriegelungsposition aktivierende Feder (21),
- einen zweiten - insbesondere bezüglich des ersten Zinkens (22) axial und winkelmäßig versetzten - Zinken (17), der die zweite Arretierung in Verriegelungsposition aufnimmt.

9. System nach einem der Ansprüche 1 bis 8, **dadurch gekennzeichnet, dass** ein Karabinerhaken (2) des Weiteren eine Feder (35) umfasst, die die Sperre (10) in Richtung ihrer Aufnahmekonfiguration betätigt.

10. System nach einem der Ansprüche 1 bis 9, **dadurch gekennzeichnet, dass** es eine Vorrichtung umfasst, die das Aufhängen eines Karabinerhakens (2) auf ein gesichertes Element (3) garantiert, wobei die Vorrichtung Folgendes umfasst:
- einen beweglich auf dem Aufnahmeteil (5) - hier drehbar
- montierten Riegel (23), zwischen einer Verriegelungsposition der Sperre (10), zum Vermeiden ihrer Betätigung in Richtung ihrer Haltekonfiguration, und einer Position der Freigabebetätigung der Sperre in Richtung der Position,
- eine dritte Feder, die den Riegel in Richtung seiner Verriegelungsposition betätigt,
- einen auf dem Riegel montierten Magneten (24), wobei der Magnet angeordnet ist, sodass eine Betätigung des Riegels in Richtung seiner Freigabeposition ermöglicht wird, wenn ein Material, dass geeignet ist, durch einen Magneten angezogen zu werden - wobei das Material insbesondere aus einem Element (3) besteht - unter dem Riegel angeordnet wird.

11. System nach einem der Ansprüche 1 bis 9, **dadurch gekennzeichnet, dass** es eine Vorrichtung umfasst, die das Aufhängen eines Karabinerhakens (2) auf ein gesichertes Element (3) garantiert, wobei die Vorrichtung Folgendes umfasst:
- einen beweglich auf dem Aufnahmeteil (5) - hier drehbar
- montierten Riegel (23), zwischen einer Verriegelungsposition der Sperre (10), zum Vermeiden ihrer Betätigung in Richtung ihrer Haltekonfiguration, und einer Position der Freigabebetätigung der Sperre in Richtung der Position,
- eine dritte Feder, die den Riegel in Richtung seiner Verriegelungsposition betätigt,
- einen Bestandteil (24) aus Material, das geeignet ist, durch einen Magneten angezogen zu werden, wobei der Bestandteil auf dem Riegel montiert ist, wobei der Bestandteil angeordnet ist, sodass eine Betätigung des Riegels in Richtung seiner Freigabeposition ermöglicht wird, wenn ein Magnet unter dem Riegel angeordnet wird,
- einen Magneten, der dazu bestimmt ist, auf dem Element (3) montiert zu werden, sodass eine Betätigung des Riegels in Richtung seiner Freigabeposition ermöglicht wird, wenn der Magnet unter dem Riegel angeordnet wird.

12. Karabinerhaken (2), verwendbar für ein System nach einem der Ansprüche 1 bis 11, wobei der Karabinerhaken Folgendes umfasst:
- einen Aufnahmehaken (4) eines Elements (3), wobei der Haken in Seitenansicht eine allgemeine Form eines umgedrehten J aufweist, wobei der Schaft des J einen unteren Griffteil (7) bildet und der gekrümmte Teil des J einen oberen Aufnahmeteil (5) des Elements bildet, wobei der Aufnahmeteil eine Durchgangsöffnung (6) des Elements aufweist,
- eine Sperre (10) - insbesondere in allgemeiner V-Form - umfassend einen ersten Schenkel, der eine Klappe (8) bildet, und einen zweiten Betätigungsschenkel (11) der Klappe, wobei die Sperre am Schnittpunkt zwischen den Schenkeln auf dem Haken um eine zwischen dem Griffteil und dem Aufnahmeteil angeordneten Drehachse (12) drehbar montiert ist, sodass sie einerseits eine Aufnahmewinkelkonfiguration des Elements zwischen den Schenkeln, bei der die Öffnung durch den zweiten Schenkel blockiert ist, wobei die Aufnahmekonfiguration, durch ausgeübtes Drücken auf den zweite Schenkel nach oben - insbesondere durch das Element -, die Verschlussbetätigung der Klappe erlaubt, und andererseits eine Haltewinkelkonfiguration des Elements in dem Aufnahmeteil zwischen den Schenkeln, bei der die Öffnung durch den ersten Schenkel blockiert ist, aufweisen kann,
- ein erstes Verriegelungsmittel der Sperre in Haltekonfiguration,
wobei der Karabinerhaken **dadurch gekennzeichnet ist, dass** der Griffteil eine Aufnahmefläche (31) umfasst, der zugewandt sich der erste Schenkel erstreckt, wenn die Sperre sich in der Aufnahmewinkelkonfiguration befindet, wobei die Fläche sich über die ganze oder einen Teil der Höhe des Griffteils erstreckt.

13. Karabinerhaken nach Anspruch 12, **dadurch gekennzeichnet, dass** der erste Schenkel (8), wenn er sich der Aufnahmefläche (31) zugewandt erstreckt, sich mindestens teilweise in einen in dem Griffteil (7) vorgesehenen Aufnahmeraum (13) von komplementärer Form einfügt.

14. Karabinerhaken nach einem der Ansprüche 12 oder 13, **dadurch gekennzeichnet, dass** der Griffteil (7) mit einem Loch (30) zum Einführen der Hand des Benutzers bereitgestellt ist.

15. Karabinerhaken nach einem der Ansprüche 12 bis 14, **dadurch gekennzeichnet, dass** er des Weiteren eine Feder (35) umfasst, die die Sperre (10) in Richtung ihrer Aufnahmekonfiguration betätigt.

16. Anbindungszusammenstellung (25) einer Person, umfassend ein System (1) nach einem der Ansprüche 1 bis 11, wobei die Zusammenstellung des Weiteren einen Anbindungsharnisch (26) eines Benutzers und zwei Gurte (27) zum Verbinden der Karabinerhaken (2) mit dem Harnisch umfasst.

## Claims

1. Safe securing system (1) for a person, comprising two carabiners (2) intended to receive at least one securing element (3), each of said carabiners comprising:
- a hook (4) for receiving said element, said hook being generally in an inverted J-shape when seen from the side, the ascender of the J forming a lower gripping part (7) and the curved part of the J forming an upper reception part (5) of said element, said reception part including an opening (6) so that said element can pass into it,
- a gate (10) - particularly a generally V-shaped gate - comprising a first branch forming a door (8) and a second branch (11) that activates said door, said gate being mounted on said hook at the intersection between said branches, free to rotate about a rotation axis (12) located between said gripping part and said reception part, so as to be able to move into firstly an angular configuration for receiving said element between said branches, in which said opening is closed off by said second branch, said reception configuration being capable of activating said door to close it by applying an upwards pressure - particularly by said element - on said second branch, and secondly an angular configuration for retaining said element inside said reception part between said branches, in which said opening is closed off by said first branch,
- a first means of locking said gate in the retaining configuration,
said system also comprising a transmission device (9) connecting said carabiners to each other, said device being arranged such that it is impossible to change from one state in which each of said carabiners is secured to an element (3) to a state in which none of said carabiners is secured to an element (3), said system being **characterised in that** said gripping part comprises a reception face (31) facing which said first branch extends when said gate is in its angular reception configuration, said face extending over all or some of the height of said gripping part.

2. System according to claim 1, **characterised in that** the gripping part (7) is provided with an orifice (30) into which the user's hand will fit.

3. System according to claim 1 or 2, **characterised in that** when the first branch (8) extends facing the reception face (31), it is at least partially inserted in a complementary shaped housing (13) formed in the gripping part (7).

4. System according to claim 3, **characterised in that** the housing (13) is in the form of a cavity delimited partly by the face (31) and by a wall (32) integrated into a projection (33) located at the bottom of said face.

5. System according to claim 4, **characterised in that** the projection (33) includes an inclined face (34) designed to guide the element (3) between the branches (8, 11) of the gate (10) in the reception configuration when the carabiner (2) is positioned above said element.

6. System according to any one of claims 1 to 5, **characterised in that** the transmission device (9) comprises two cables (14) each sliding in a sheath, each of said cables being connected at their ends to:
- a gate (10), at a distance from its rotation axis (12),
- and to the first means of locking the other gate (10), such that placing a gate (10) in the angular retaining configuration - respectively the reception configuration
- causes deactivation - respectively activation - of the first locking means of the other gate (10).

7. System according to any one of claims 1 to 6, **characterised in that** the first locking means comprises:
- a first latch (15) fitted in rotation on the hook (4) between a locked position and an unlocked position,
- a first spring (16) that activates said latch to move it towards its locked position,
- a first tooth (22) located on said gate, to hold said latch in the locked position.

8. System according to any one of claims 1 to 7, **characterised in that** it also includes a second locking means, said second locking means comprising:
- a second latch (18) mounted free to rotate - in particular about the rotation axis (19) of the first latch (15) - on the hook (4) between a locked position and an unlocked position, said latch having a zone (20) for allowing the user to activate it - particularly by pressing it - to bring it to the unlocked position,
- a second spring (21) - particularly taken from the first spring (16) - pushing said second latch to its locked position,
- a second tooth (17) - particularly offset axially and angularly relative to the first tooth (22) - holding said second latch in the locked position.

9. System according to any one of claims 1 to 8, **characterised in that** a carabiner (2) also comprises a spring (35) activating the gate (10) to put it into its reception configuration.

10. System according to any one of claims 1 to 9, **characterised in that** it comprises a device guaranteeing that a carabiner (2) will be attached to a secure element (3), said device including:
- a lock (23) mounted to be mobile - in this case in rotation - on the reception part (5), between a locked position of the gate (10) to prevent it from being moved to its retaining configuration and a release position to allow to activate said gate to said position,
- a third spring moving said lock to its locked position,
- a magnet (24) mounted on said lock, said magnet being arranged so as to enable said lock to be pushed to its release position when a material that can be attracted by a magnet - said material forming particularly a part of an element (3) - is placed below said lock.

11. System according to any one of claims 1 to 9, **characterised in that** it comprises a device guaranteeing that a carabiner (2) will be attached to a secure element (3), said device including:
- a lock (23) mounted to be mobile - in this case in rotation - on the reception part (5), between a locked position of the gate (10) to prevent it from being moved to its retaining configuration and a release position to allow to activate said gate to said position,
- a third spring moving said lock to its locked position,
- a component (24) made of a material that can be attracted by a magnet, said component being mounted on said lock, said component being arranged so as to enable actuation of said lock to its release position when a magnet is located below said lock,
- a magnet intended to be mounted on an element (3) to enable said lock to be actuated to its release position when said magnet is located below said lock.

12. Carabiner (2) that can be used for a system according to any one of claims 1 to 11, said carabiner comprising:
- a hook (4) for receiving an element (3), said hook being generally in an inverted J-shape when seen from the side, the ascender of the J forming a lower gripping part (7) and the curved part of the J forming an upper reception part (5) of said element, said reception part including an opening (6) so that said element can pass into it,
- a gate (10) - particularly a generally V-shaped gate - comprising a first branch forming a door (8) and a second branch (11) that activates said door, said gate being mounted on said hook at the intersection between said branches, free to rotate about a rotation axis (12) located between said gripping part and said reception part, so as to be able to move into firstly an angular configuration for receiving said element between said branches, in which said opening is closed off by said second branch, said reception configuration being capable of activating said door to close it by applying an upwards pressure - particularly by said element - on said second branch, and secondly an angular configuration for retaining said element inside said reception part between said branches, in which said opening is closed off by said first branch,
- a first means of locking said gate in the retaining configuration,
said carabiner being **characterised in that** said gripping part comprises a reception face (31) facing which said first branch extends when said gate is in the angular reception configuration, said face extending over all or some of the height of said gripping part.

13. Carabiner according to claim 12, **characterised in that** when the first branch (8) extends facing the reception face (31), it is at least partially inserted in a complementary shaped housing (13) formed in the gripping part (7).

14. Carabiner according to one of claims 12 or 13, **characterised in that** the gripping part (7) is provided with an orifice (30) into which the user's hand will fit.

15. Carabiner according to any one of claims 12 to 14, **characterised in that** it also comprises a spring (35) activating the gate (10) to put it into its reception configuration.

16. Assembly (25) for securing a person, comprising a system (1) according to any one of claims 1 to 11, said assembly also comprising a user securing harness (26) and two straps (27) connecting the carabiners (2) to said harness.
